# EUROPÄISCHE PATENTSCHRIFT

(11) **EP 0 684 505 B1**
(45) Veröffentlichungstag und Bekanntmachung des Hinweises auf die Patenterteilung: **01.09.1999**
(21) Anmeldenummer: 95107605.8
(22) Anmeldetag: 18.05.1995
(51) Int. Cl.: G03B 27/46, G03B 27/73

(54) **Verfahren und Vorrichtung zur Herstellung sogenannter Indexprints**
Method and device for manufacturing so-called index prints
Procédé et dispositif pour la fabrication d'images dites composées

(30) Priorität: 27.05.1994 DE 4418601
(43) Veröffentlichungstag der Anmeldung: 29.11.1995
(73) Patentinhaber: Agfa-Gevaert AG, 51373 Leverkusen (DE)
(72) Erfinder: Rauh, Hans-Jürgen, Dr., D-82064 Strasslach-Hailafing (DE); Treiber, Helmut, Dr., D-81479 München (DE); Schindler, Hans-Georg, D-83607 Holzkirchen (DE)

(56) Entgegenhaltungen:
- EP-A- 0 308 967
- EP-A- 0 367 879
- EP-A- 0 629 908
- US-A- 4 805 039
- PATENT ABSTRACTS OF JAPAN vol. 017 no. 273 (P-1545) ,26.Mai 1993 & JP-A-05 011353 (FUJI PHOTO FILM CO LTD) 22.Januar 1993

## Beschreibung

Die Erfindung betrifft Verfahren und Vorrichtungen zur Herstellung sogenannter Indexprints nach dem Oberbegriff der Ansprüche 1 bzw. 2.

Sogenannte Indexprints sind gegenüber normalen Kopien von Farbkopiervorlagen stark verkleinerte Kopien, die auf einem Bildblatt in größerer Anzahl neben- und hintereinander angeordnet sind, um dem Fotofreund einen raschen Überblick über die Bilder z. B. eines Films zu ermöglichen, insbesondere auch die Lage der einzelnen Vorlagen innerhalb eines Filmstreifens rasch erkennen zu können.

Zur Herstellung solcher Indexprints ist es z. B. aus der europäischen Patentanmeldung 543 233 bekannt, mittels eines hochauflösenden Scanners den Inhalt einer Kopiervorlage in den drei Farben abzutasten und aufgrund dieser Meßsignale einerseits die Kopierlichtmengen für den Kopiervorgang zu steuern, zum anderen diese Bildsignale der Kopiervorlagen einem weiteren Printer zur Herstellung eines Indexprints zuzuleiten. Hier wird ein zusätzlicher Printer erforderlich; das Zusammenführen der Indexprints mit dem Film nach den jeweiligen Bearbeitungsvorgängen des Kopiermaterials erfordem erhebliche Vorkehrungen, um Verwechslungen zu vermeiden.

Aus der europäischen Patentanmeldung 308 967 ist es ferner bekannt, in der Kopierstation eines Farbkopiergerätes in den von einer durchleuchteten Kopiervorlage kommenden Strahlengang einen Umlenkspiegel einzuschieben, der das von einer durchleuchteten Kopiervorlage kommende Licht dem Objektiv einer Farbvideokamera zuführt. Die ohne Filter in dem Strahlengang gewonnenen Bildsignale werden einem Belichtungsrechner zur Farbkorrektur, Gradationskorrektur und Bildzusammensetzung zugeführt, woraufhin die so optimierten Bildsignale gespeichert und bei Erreichen einer Anzahl von Bildern, die der Füllung eines Blattes entspricht, durch eine CRT über einen weiteren Spiegel auf dasselbe Kopiermaterial in der Kopierstation aufbelichtet werden. Der Kopiervorgang muß deshalb unterbrochen werden, bis die Belichtung mittels CRT abgeschlossen ist. Dadurch wird die Kopierleistung entsprechend geschmälert.

Aufgabe der vorliegenden Erfindung ist es, bei einem Verfahren zur Herstellung von Indexprints die angegebenen Nachteile zu vermeiden.

Diese Aufgabe wird gelöst durch ein Verfahren gemäß dem kennzeichnenden Teil des Anspruchs 1 bzw. durch eine Vorrichtung gemäß dem kennzeichnenden Teil des Anspruchs 2. Die in den Ansprüchen beschriebenen Ausführungsformen der Erfindung ermöglichen es, auch von zu einem langen Band zusammengefügten, einzelnen Filmstreifen, die jeweils einem Vorlagensatz entsprechen, Indexprints praktisch ohne Geschwindigkeitseinbuße gegenüber einer reinen Kopiervorrichtung auf demselben Kopiermaterialbandstreifen aufzubelichten. Als Vorlagensatz sind dabei in der Regel die Vorlagen eines Filmes anzusehen. Für diese Erfindung können als Satz auch Teilmengen der Vorlagen angesehen werden, die z. B. gerade ausreichen, um ein Indexprintblatt zu füllen. Insbesondere bei Kurzfilmen oder Streifenabschnitten können auch mehrere Streifen eines Auftrags einen Satz bilden. Weitere Einzelheiten und Vorteile der Erfindung ergeben sich aus den Unteransprüchen im Zusammenhang mit der Beschreibung von Ausführungsbeispielen, die im folgenden anhand von Figuren eingehend erläutert sind.

Es zeigen:
- Fig. 1: ein Schema eines Rollenkopiergerätes zur Herstellung von Kopien und Indexprints auf demselben Papierband mit einer Kathodenstrahlröhre als Indexprinteinrichtung,
- Fig. 2: eine gegenüber Fig. 1 abgewandelte Anordnung mit einem hochauflösenden Scanner zur Gewinnung der Bildsignale,
- Fig. 3: ein Rollenkopiergerät zur Aufbelichtung von Bildern und Indexprints auf dasselbe Kopiermaterialband mittels Integralbelichtung der Indexprints und
- Fig. 4: eine gegenüber Fig. 3 abgewandelte Einrichtung mit einem einzigen, in die verschiedenen Belichtungslagen verschiebbaren Objektiv.

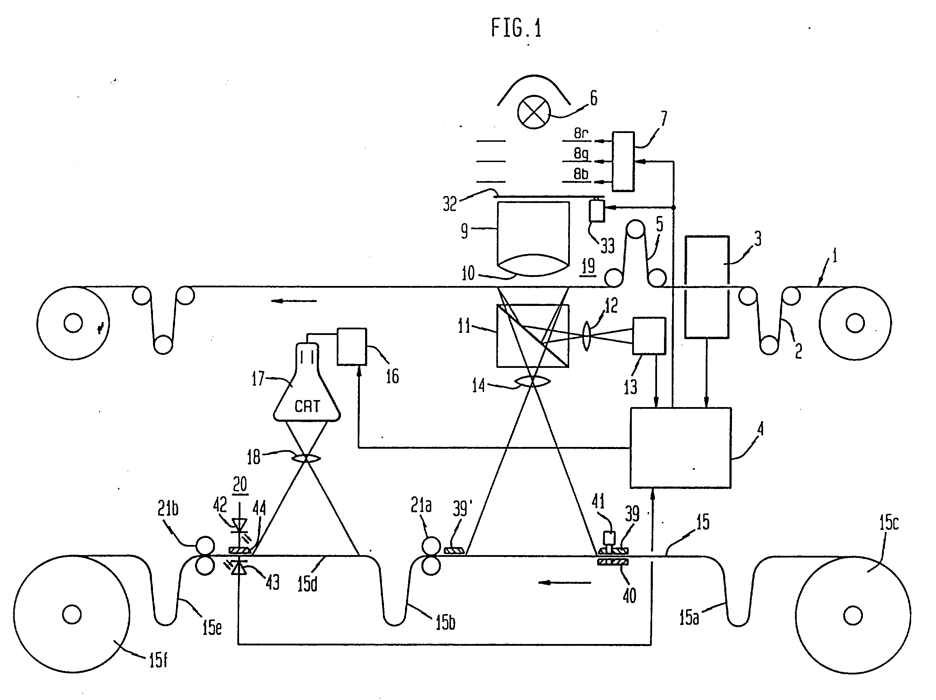

In Fig. 1 ist ein Rollenkopiergerät schematisch dargestellt, bei dem Sätze von Kopiervorlagen, insbesondere Filmstreifen, zu einem sehr langen Filmband 1 zusammengefügt und auf einer Rolle aufgespult sind. Dieses Filmband 1 wird über einen Puffer 2 und einen Speicher 5 schrittweise von rechts nach links in der Figur durch das Rollenkopiergerät geführt, bis es dann wieder aufgewickelt wird. Der Filmstreifen durchläuft als erstes zur bereichsweisen Ausmessung in drei Farben einen sog. Scanner 3, der einen konventionellen Aufbau mit drei in den Farben gefilterten Diodenzeilen aufweist. Die Meßdaten werden an einen Bilddatenrechner 4 weitergeleitet. In diesem Bilddatenrechner werden z. B. nach der Lehre der DE-PS 28 40 287 die Meßwerte einer größeren Anzahl von Vorlagen, insbesondere eines ganzen Filmstreifens, zur Gewinnung von sog. Dichtedifferenzkurven ausgewertet, nach denen für jede einzelne Vorlage unter Berücksichtigung des dichtespezifischen Farbfehlers Kopierlichtmengen in den drei Farben errechnet werden. Da die Belichtung eines Filmstreifens erst dann beginnen soll, wenn diese größere Zahl von Kopiervorlagen ausgewertet wurde, ist in dem Filmstreifenspeicher 5 dafür Platz vorgesehen.

Nach diesem Speicher 5 folgt die Kopierstation 19, die folgenden Aufbau hat: Das Licht einer Lichtquelle 6 mit Reflektor fällt durch ein noch zu erläuterndes Filteraggregat 7, 8 an einem Verschluß 32 mit Antriebsmagnet33 vorbei in einen Mischschacht und einen Kondensor 10 auf die Kopiervorlage in der Kopierstation. Das hinter der Kopiervorlage bildmäßig modulierte Kopierlicht fällt auf einen Strahlenteiler 11, einen unter 45° geneigten teildurchlässigen Spiegel, dessen reflektierter Anteil über ein Objektiv 12 einem Bildsensor-z.B. einer CCD-Kamera 13-zugeführt wird. Der durchgehende Anteil des Kopierlichtes geht über ein Objektiv 14 auf ein Kopiermaterialband 15, das im Bereich der Belichtungsöffnung plan gehalten wird.

Das Filteraggregat 7 besteht aus teilweise in den Strahlengang einschiebbaren Filtern maximaler Absorption in den Farben rot, grün und blau, die durch eine Filtersteuerung 7 entsprechend den im Rechner 4 ermittelten und vorgegebenen Steuerwerten in eine solche Position gebracht werden, daß die Anfärbung des Kopierlichtes gerade eine für die bildwichtigen Bereiche der Vorlage farbneutrale Wiedergabe ergibt. Die Kopierlichtmenge wird über den Verschluß 32, 33 ebenfalls aufgrund der Vorgaben des Bildrechners 4 gesteuert.

Die Bildsignale des Bildsensors 13 werden über den Bilddatenrechner einem Bildsignalspeicher 16 zugeführt, der eine ausreichende Kapazität hat, um die Bildsignale mit einer für die Belichtung von Indexprints ausreichenden Auflösung eines Vorlagensatzes, d. h. in der Regel eines Filmes, einzuspeichern. Nachdem die Bildsignale nicht von einer mit weißem Licht durchstrahlten Vorlage, sondern mit einem zur Kompensation ihrer Farbstichigkeit angefärbten Kopierlicht durchstrahlt werden, sind die Signale des Bildsensors bereits farblich optimiert. Auch die Gesamthelligkeit kann über die Vorgaben zum Verschluß 33 leicht berücksichtigt werden.

Die Indexprintstation 20 ist nun gegenüber der Kopierstation 19 in Laufrichtung des Kopiermaterialbandes 15 versetzt, und zwar wenigstens um eine Bildlänge plus dem erforderlichen Platzbedarf für eine Kopiermaterialbandspeicherschlaufe 15b sowie für einen ersten Papiertransport 21a.

Die Belichtung der Bilddaten im Speicher 16 auf das Papierband kann durch jede bekannte Bildschreibeinrichtung erfolgen, z. B. durch einen Laserbelichter; vorrangig ist jedoch dafür eine Kathodenstrahlröhre 17 geeignet, die wegen der geringen Anforderungen an die Auflösung eine kommerzielle Farbfernsehröhre sein kann. Bei den von dem Bilddatenrechner 4 an den Speicher 16 gelieferten Bildsignalen sind dabei Veränderungen in der Farbe aufgrund der Röhrencharakteristik und der Empfindlichkeit des Kopiermaterials bereits berücksichtigt. In dem Bildspeicher 16 sind außerdem die Bildsignale so abgespeichert, daß mit dem durch das Objektiv 18 vorgegebenen Abbildungsmaßstab die vorgesehene Anzahl von verkleinerten Abbildungen in Zeilen und Spalten gerade den zur Belichtung vorgesehenen Raum auf dem Kopiermaterialband 15d ausfüllt.

Um das Kopiermaterialband 15 vollständig auszunutzen und die Indexprints eines Vorlagensatzes bzw. eines Filmes jeweils im Anschluß an die letzte Kopie eines Satzes aufzubelichten, muß vor der Aufbelichtung der Indexprints nach der letzten Kopierbelichtung der nachlaufende Rand dieser letzten Kopie gerade so weit transportiert werden, damit er bei dem von der Kopierstation 19 weiter entfernten, senkrecht zur Bandlaufrichtung verlaufenden Rand des Belichtungsbereiches in der Indexprintstation 20 zu liegen kommt. Eine zweite, beim Papiertransport einzuhaltende Bedingung ist, daß nach Beendigung des Kopierens eines Vorlagensatzes eine der Anzahl der Indexprints entsprechende Länge des Kopiermaterialbandes ohne Kopierbelichtung durch die Kopierstation gefördert werden muß.

Dies wird dadurch realisiert, daß zunächst von dem Bilddatenrechner vorgegeben wird, welche Länge von Kopiermaterialband für die Indexprints des jeweils abkopierten Vorlagensatzes benötigt wird. Dann wird die in dem Papierbandspeicher befindliche Länge der Speicherschlaufe durch Transport mittels der zweiten Transportvorrichtung 21b auf eine definierte Länge gebracht, z. B. auf eine völlige Streckung. Es ist dann bekannt, welche Bandlänge zunächst durch die Transportvorrichtungen 21a und 21b transportiert werden muß, um die nachlaufende Kante der zuletzt erstellten Kopie an den linken Rand des Belichtungsbereiches der Indexprintstation 20 zu fördern. Das berechnete Ende des mit Indexprints zu belichtenden Bandes wird dann durch die Transportvorrichtung 21a an den der Station 20 benachbarten Rand der Belichtungsöffnung der Kopierstation 19 gefördert. Damit ist der erste für den nächsten Auftrag zur Verfügung stehende Bereich des Kopiermaterialbandes in der für das Kopieren richtigen Stellung. Gleichzeitig kann nun in der Indexprintstation 20 mit dem Belichten der Indexprints begonnen werden und in der Kopierstation 19 mit dem Kopieren des nächsten Vorlagensatzes. Dieses Spiel wiederholt sich dann bei jedem Vorlagensatz bis zum Ende des Vorlagenbandes 1. Ist bei Vorlagensätzen mit einer geringen Vorlagenanzahl die für Indexprints benötigte Kopiermaterialbandlänge kürzer als der Mittenabstand der beiden Stationen 19 und 20, so ist der Beginn der Indexprintbelichtung zu verzögern, bis die Kopierbelichtungen des nächstfolgenden Vorlagensatzes den Transport des freigehaltenen Abschnittes des Materialbandes in die Indexprintstation erlaubt haben. Da dann die Zahl der Indexprints gering ist, wirkt sich dies nicht nachteilig auf die Kopierleistung aus.

Die Verfolgung der transportierten Materialbandlängen kann gegenüber der Zählung der Transportschritte vereinfacht wrden, wenn in der Kopierstation ein üblicher Lochmarker angeordnet wird und die so erzeugten Löcher in der Indexprintstation zur Positionierung der Materialbandabschnitte ausgewertet werden. Hierzu sind am Weg des Kopiermaterialbandes 15 an der in Richtung des Kopiermaterialbandtransportes hinteren Kante des Bildfeldes der Bildbelichtungsstation 19 ein erstes Maskenband 39 angeordnet, dem auf der gegenüberliegenden Seite ein zweites Maskenband 39' entspricht. Dieses Maskenband kann entsprechend dem jeweiligen Positivbildformat in Richtung des Kopiermaterialbandtransportes verschiebbar sein, so daß jeweils quer zur Bandlängsrichtung das Bildfeld begrenzt wird. Zusammen mit dem Maskenband 39 wird ein unterer Gegenhalter 40 verschoben, während mit dem Maskenband 39 ein Lochmarker 41 verbunden ist. Jeweils nach Beendigung eines Kopiermaterialtransportes und vor Beginn eines weiteren Transportes, möglicherweise auch während der Belichtung, wird für jede Belichtung im nicht genutzten Randbereich des Bildes durch den Lochmarker 41 und die entsprechende Bohrung in der Matrize 40 ein Loch gestanzt, das ohnedies für die Positionierung des Kopiermaterialbandes in einer Schneideinrichtung benötigt wird.

Am vorlaufenden Rand des Bildfeldes in der Indexprintstation 20 ist ebenfalls ein Maskenband 44 angeordnet, das die Belichtung des Bildfeldes begrenzt. Mit diesem Maskenband ist eine lichtaussendende Diode 42 verbunden, der ein Lichtempfänger 43 gegenübersteht. Diese Einrichtungen sind angeordnet auf der Bahn der durch die Einrichtungen 40, 41 erzeugten Schnittmarke. Wenn diese Schnittmarke durch den Strahl der Diode 42 läuft und den Lichteinfall auf den Empfänger 43 freigibt, wird der Papiertransport stillgesetzt, um die verschiedenen Bildfelder lückenlos nur mit der vorgesehenen Randbreite aneinander angrenzend und ohne Überschneidung zu positionieren. Hierzu wird das Signal das Lichtempfängers 43 an den Rechner 4 weitergeleitet, der seinerseits den Antrieb der Transportrollen 21b steuert.

Das Ineinandergreifen der verschiedenen Abläufe ergibt sich dann wie folgt: Mit dem Einlaufen einer Klebestelle in dem Vorlagenband 1 in den Scanner 3 wird ein neuer Scanvorgang für einen Film nach DE-P2840287 eingeleitet. Die Meßdaten werden sukzessive im Bilddatenrechner 4 verarbeitet und die ausgemessenen Kopiervorlagen in dem Speicher 5 untergebracht. Wenn eine ausreichende Anzahl von Vorlagen auf die richtigen Kopierdaten ausgemessen ist, wird der Einlauf der ersten Kopiervorlage dieses Satzes in die Kopierstation freigegeben. Durch Einstellung der Filter 8 entsprechend den Bilddaten aus dem Rechner 4 über die Filtersteuerung 7 wird das Kopierlicht entsprechend der jeweiligen Vorlage angefärbt und über das Öffnen des Verschlusses 32, 33 der Belichtungsvorgang des Bandes 15 begonnen. Gleichzeitig werden über den teildurchlässigen Spiegel ein geringer Prozentsatz, z. B. 10 % des Kopierlichtes, dem Bildsensor 13 zugeführt, der sofort farbkorrigierte Helligkeitswerte in den drei Farben erfassen kann. Diese Helligkeitswerte werden entsprechend der Röhrencharakteristik und der Papierempfindlichkeit sowie der festgestellten Gesamtlichtmenge so korrigiert, daß die aus dem Bildspeicher 16 ausgelesenen Werte auf der Bildfläche der CRT 17 bereits in Zeilen und Spalten in der richtigen Größe für die Aufbelichtung auf dem Band 15 wiedergegeben werden. Dies erfolgt dann, wenn (durch Erfassen einer Vorlagenklebestelle erkannt) die letzte Vorlage eines Satzes aus der Kopierstation 19 heraustransportiert wird. Es erfolgen dann die beschriebenen Vorgänge zum Transport des Papierbandes 15 durch die Transportvorrichtungen 21a, 21b, um das Papierband um den Versatz zwischen den beiden Stationen plus eine Bildlänge zu befördern. Nach dem Transport der Papierbandlänge für die gewünschten Indexprints an die linke Kante des Bildfensters der Kopierstation 19 kann mit dem Kopieren des nächsten Satzes von Vorlagen begonnen werden.

Ein so hergestelltes Band mit Kopien enthält nach der Entwicklung die gewünschten Kopien in bandfüllender Größe und guter Bildqualität, während die am Ende des Kopiensatzes aufbelichteten Indexkopien sofort dem Auftrag zugeführt werden und mit optimaler Farb- und Dichtekorrektur abgebildet sind.

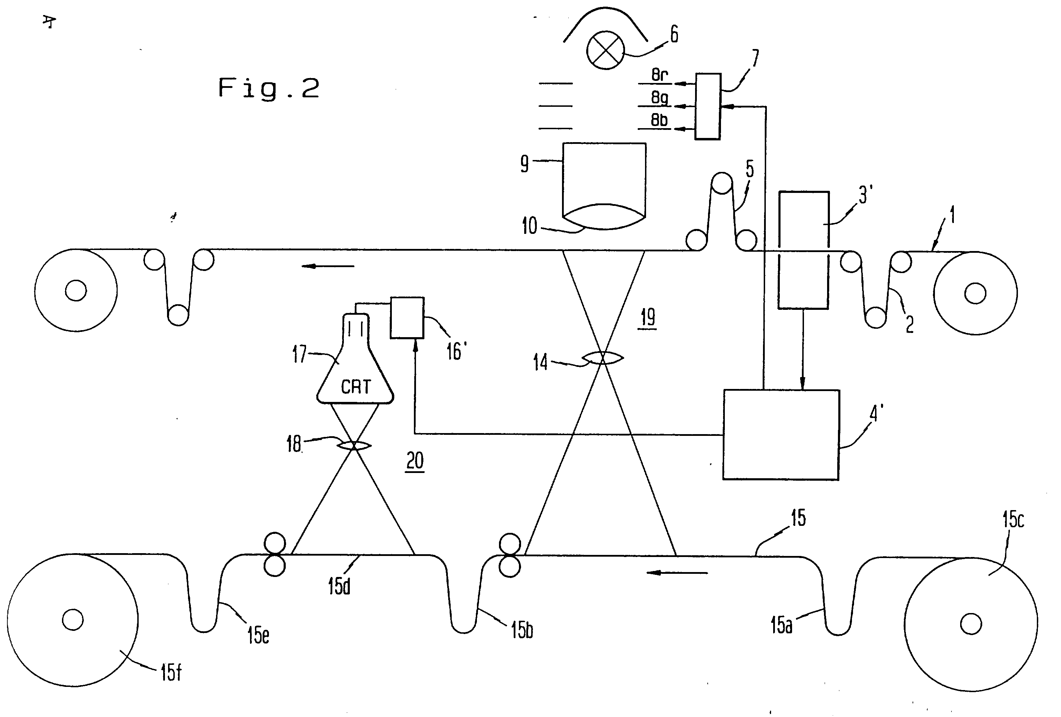

Bei der Ausführungsform nach Fig. 2 ist gegenüber der Anordnung nach Fig. 1 unterschiedlich der Scanner 3, der im Gegensatz zum Scanner in Fig. 1 hochauflösend ist, so daß er bereits die Bildsignale für die Indexprints liefern kann. Diese sind allerdings noch nicht farbkorrigiert, so daß die aufgrund derselben Scanwerte ermittelten Kopierlichtmengen in den Farben auch zur Korrektur der Bildsignalwerte für die Indexprintherstellung verwendet werden. Der Scanner ist also sehr viel höher auflösend mit einer für die Bildsignalgewinnung erforderlichen Auflösung und mit 3' bezeichnet. Auch die Konfiguration des Bilddatenrechners 4' und des Speichers 16' sind in Anpassung an die unterschiedlichen Daten etwas verändert. Im übrigen sind die Kopierstation 19 und die Indexprintstation 20 einschließlich den Einrichtungen zum Papiertransport in gleicher Weise wie bei der Anordnung nach Fig. 1 ausgebildet und brauchen nicht gesondert beschrieben zu werden.

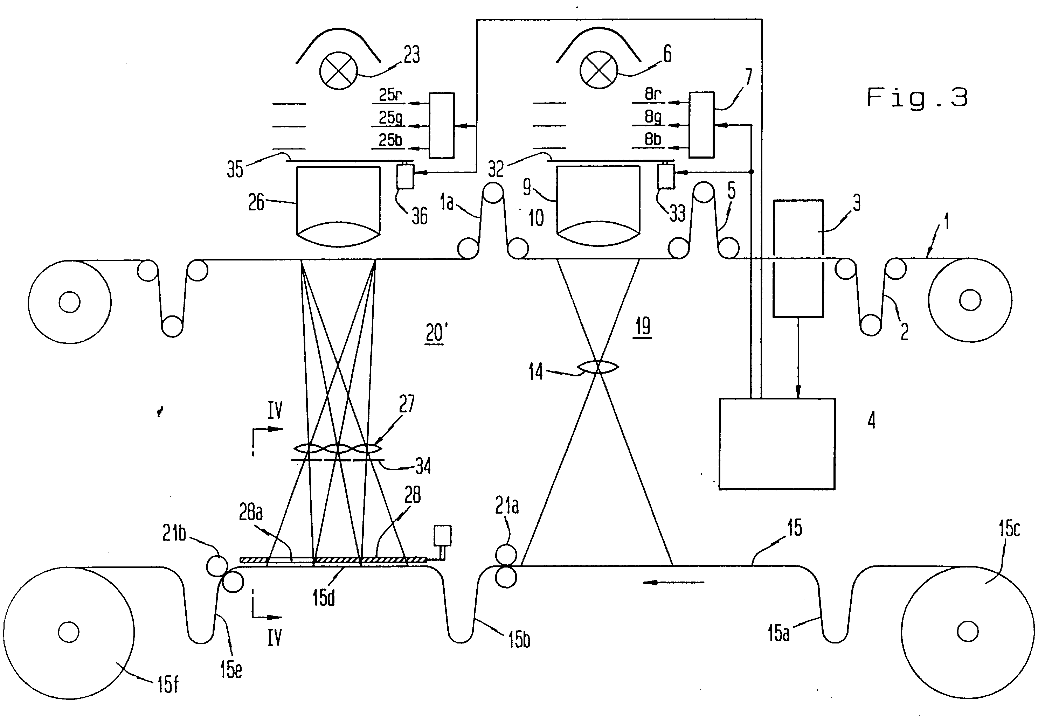

Bei der in Fig. 3 dargestellten Ausführungsform hat die Kopierstation 19 mit Ausnahme der Auflösung des Scanners 3 dieselbe Struktur und Funktion wie die Kopierstation 19 in Fig. 2. Der Scanner 3 hat jedoch nur eine Auflösung für eine bereichsweise Abtastung der Kopiervorlagen mit etwa 100 bis 400 Meßpunkten, wie es für eine Bilddatenberechnung ausreicht.

Abweichungen gibt es jedoch in der Indexprintstation 20. Diese hat ein Lampenhaus mit Lichtquelle 23, Filtersteuerung 24 und Farbfiltern 25 R, G, B, die im wesentlichen den gleichwirkenden Einrichtungen in der Kopierstation 19 entsprechen. Auch die Lichtmischeinrichtung 26 oberhalb der Filmbühne entspricht der Lichtmischeinrichtung 9. Jedoch ist die Abbildungseinrichtung für die Einzelbilder der Indexprints so ausgebildet, daß diese nacheinander jeweils in der richtigen Größe an der richtigen Stelle (Zeilen und Spalten) auf den im Belichtungsbereich stehenden Teil des Kopiermaterialbandes integral aufbelichtet werden. Dazu ist in einer entsprechenden Ebene eine der Zahl der Indexprintbilder entsprechende Anzahl von Objektiven 27 angeordnet, die jeweils mit einem einzeln steuerbaren Hilfsverschluß 34 zusammenarbeiten. Für alle Indexprints ist ein zusätzlicher Hauptverschluß 35 mit Antriebsmagnet 36 im Beleuchtungsstrahlengang vorgesehen, der bezüglich Schnelligkeit und Genauigkeit alle Anforderungen erfüllt. Die Hilfsverschlüsse 34 können dann kostengünstiger ausgeführt werden. Zum Beispiel wird bei drei Bildern in einer Zeile und ebenfalls drei Bildern in einer Spalte ein Raster von neun Objektiven 27 vorgesehen, die nacheinander neun sukzessive in den Strahlengang der Indexprintstation 20 geförderte Kopiervorlagen zunächst durch das Objektiv 27 in der linken vorderen Ecke, dann die nächste Vorlage durch das mittlere Objektiv dieser vorderen Reihe und schließlich das dritte Negativ durch das rechte Objektiv der vorderen Reihe auf die entsprechenden Flächen des Bandes 15 abbilden. Zur Vermeidung von Störungen durch Streulicht ist femer eine Streulichtabdeckung 28 mit einer Belichtungsöffnung 28a in der richtigen Größe vorgesehen, die über eine entsprechende Verschiebeeinrichtung jeweils in den Strahlengang des Objektivs 27 gebracht wird, das durch die Betätigung der Verschlüsse 34, 35 kurzzeitig wirksam wird. Femer ist der Bilddatenrechner 4 mit einer größeren Speichereinrichtung für Bilddaten versehen, die die Bilddaten des Vorlagensatzes über den Erstkopiervorgang in der Kopierstation 19 hinaus speichert und jeweils in Zuordnung zu dem in der Indexprintstation 20 stehenden Negativ über die Filtersteuerung 24 die entsprechenden Farbfilter auf dieselben Werte einstellt, wie dies in der Kopierstation 19 der Fall war.

Wichtiger Bestandteil für diese Arbeitsweise ist ein Filmspeicher 1a zwischen den beiden Stationen, der eine solche Kapazität hat, daß er mindestens jeweils den maximalen Satz von Vorlagen aufnehmen kann.

Die Wirkungsweise dieser Einrichtung ist im Bereich der Kopierstation 19 gleichartig mit der der Kopierstation in den Figuren 1 und 2. Ein Vorlagensatz wird zunächst dem Scanner 3 zugeführt, und für jede einzelne Kopiervorlage werden die Kopierlichtmengen in den drei Farben festgelegt und eingespeichert. Diese Rechnungen lassen sich erst abschließend durchführen, wenn zumindest ein größerer Teil der Vorlagen eines Satzes ausgewertet und in den Speicher 5 eingeschoben wurde. Sodann werden jeweils in Zuordnung zu der in der Kopierstation 19 stehenden Kopiervorlage die Bilddaten aus dem Speicher4 der Filtersteuerung 7 und der Verschlußsteuerung 32, 33 zugeführt, so daß eine optimierte Kopie erstellt wird. Die so abkopierte Vorlage wird jedoch nicht zum Aufspulen freigegeben, sondern zunächst in den Speicher 1a überführt. Nach Abschluß des Kopiervorganges für diesen Vorlagensatz, z. B. erkennbar durch eine durchlaufende Filmklebestelle, wird nun zunächst der Papierbedarf für die Indexprints berechnet und die entsprechende unbelichtete Papierfläche mit ihrem Anfang in die Papierbandaufnahme der Indexprintstation 20 gefördert. Gleichzeitig wird die erste Vorlage dieses Satzes in das Kopierfenster der Indexprintstation 20' eingeführt und aufgrund der immer noch in dem Bilddatenrechner4 gespeicherten Kopierdaten die Filter 25 für diese Vorlage eingesteuert und über den Hilfsverschluß 34 des ersten Objektivs 27 und den Hauptverschluß 35, 36 die Belichtung dieser Vorlage in die Eckposition des Kopiermaterialbandes durchgeführt. Für die nächste Kopie sind wiederum zu betätigen: Filtersteuerung, Vorlagentransport, Streulichtabdeckung und zugehöriger Verschluß 34 an dem nächsten Objektiv 27. Auf diese Weise wird z. B. der erste Teil von neun Vorlagen eines Satzes auf eine Bildgröße abkopiert, dann der Kopiermaterialtransport 21b wieder in Tätigkeit gesetzt.

Eine Vereinfachung läßt sich auch darstellen, wenn nur eine Zeile von Objektiven 27 quer zur Bandlaufrichtung vorgesehen ist, so daß nur ein Teil eines Indexprints von z. B. drei nebeneinander liegenden, verkleinerten Abbildungen aufbelichtet wird und dann das Kopiermaterialband 15 um ein Drittel einer Bildlänge transportiert wird. Schließlich wäre es auch denkbar, diese Zeile von Objektiven in die drei Positionen von Objektivzeilen gemäß Fig. 3 zu bewegen. Bei dieser Art der integralen Aufbelichtung jeweils einer Kopiervorlage in einen anderen Teilbereich des für den Indexprint vorgesehenen Kopiermaterials werden nur sehr kleine Flächen belichtet, so daß entsprechend kurze Belichtungszeiten entstehen. Dementsprechend schwächer kann z.B. die Kopierlichtquelle 23 ausgebildet sein, ohne daß dadurch die Kopierleistung in der Kopierstation 19 sinkt. Nachdem in der Regel von annähernd gleich großen Sätzen ausgegangen werden kann, kann über den Speicher 1a ein Ausgleich in der Form herbeigeführt werden, daß die beiden Stationen 19 und 20 im wesentlichen immer parallel arbeiten können.

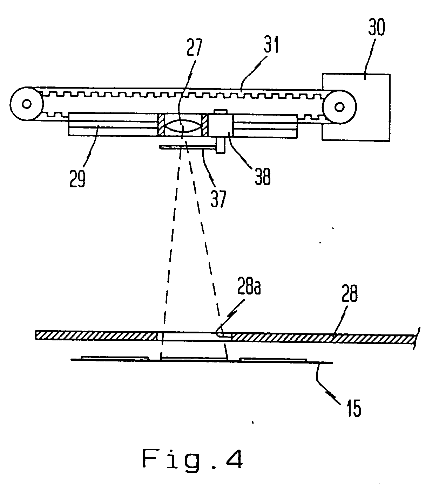

Eine besonders einfache Ausführungsform für die integrale Aufbelichtung der Kopiervorlagen eines Satzes in der Indexprintstation 21 ist in Fig. 4 dargestellt. Hier ist nur ein Objektiv 27 auf einer verschiebbaren Trägereinrichtung zusammen mit einem einzigen Verschluß 37 mit Antrieb 38 angeordnet, die in einer Führung 29 quer zur Bandlaufrichtung verschiebbar und durch einen Schrittmotor 30 und ein Übertragungsmedium, z. B. einen Zahnriemen 31, gesteuert bewegbar ist. Hier werden also zeitlich nacheinander durch ein und dasselbe Objektiv 27 aufeinander folgende Kopiervorlagen auf nebeneinander liegende Bereiche des Kopiermaterialbandes 15 aufbelichtet, bis durch Papiertransport um eine Teilbildlänge die nächste Indexprintzeile begonnen wird.

Die Ausführungsform der Erfindung nach Fig. 4 eröffnet weiter die Möglichkeit, das Objektiv 27 als Zoom-Objektiv auszubilden, d.h. Kopiervorlagen unterschiedlich groß auf das Kopiermaterialband 15 abzubilden. Außerdem können durch entsprechende Steuerung des Schrittmotors 30 unterschiedliche Positionen für das Objektiv 27 angefahren werden. Damit ergibt sich die Möglichkeit, allein durch Steuerungsvorgaben auf unterschiedlich breitem Kopiermaterial 15 auch unterschiedliche Zahlen von Indexprintbildern abzubilden. Es können z. B. dann auf einem vier Zoll breiten Material auch vier mal ein Zoll breite Indexprintbilder abgebildet werden, während auf drei Zoll breitem Kopiermaterial eben drei ein Zoll breite Bilder aufbelichtet sind. Bei einer weniger leicht umstellbaren Einrichtung können aber auch Festobjektive 27 mit unterschiedlicher Schnittweite ausgetauscht werden.

Schließlich besteht bei der Ausführungsform der Erfindung nach den Fig. 1 und 2 durch den Scanner 3 die Möglichkeit, die im Barcode am Filmrand aufgezeichnete Bildnummer zu lesen und durch Zeichengenerierung im Rechner in den Bildspeicher 16 die Bildnummern im Klartext einzuspeichern und dann über die CRT jeweils neben den Indexprints aufzubelichten. Bei der Anordnung nach Fig. 3 kann die im Klartext auf dem Filmrand aufbelichtete Bildnummer integral neben dem Indexbild wiedergegeben werden.

## Patentansprüche

1. Verfahren zur Herstellung von Kopien und von sogenannten Indexprints - das sind gegenüber der Kopie verkleinerte Abbildungen - von Sätzen von Kopiervorlagen auf einem Kopiermaterialband, wobei die Kopiervorlagen zu einem Band zusammengefügt sind, und wobei die verkleinerten Abbildungen zu einem Indexprint von der Breitenabmessung des Kopiermaterialbandes nebeneinander und in Laufrichtung des Bandes nacheinander auf das Kopiermaterialband aufbelichtet werden, dadurch gekennzeichnet. daß die Kopierbelichtung und die Indexprintbelichtung an gegeneinander in Bandlaufrichtung versetzten Stationen erfolgen, daß für die Steuerung der Kopierlichtmengen bei der Indexprintbelichtung die Ergebnisse einer bereichsweisen Messung der Kopiervorlagen für die Kopierbelichtung herangezogen werden und daß das Kopiermaterialband zwischen den beiden Stationen längenkontrolliert derart transportiert wird, daß nach dem Kopieren der letzten Vorlage eines Satzes ein Kopiermaterialbandtransport in die Indexprintstation erfolgt, bis die nachlaufende Kante der letzten Kopie den von der Kopierstation weiter entfernten, senkrecht zur Bandlaufrichtung verlaufenden Rand des Belichtungsbereiches der Indexprintstation erreicht hat und weitere Kopiervorgänge in der Kopierstation ausgesetzt werden, bis das nachlaufende Ende einer für die Indexprints dieses Vorlagensatzes erforderlichen, von Kopierbelichtungen freizuhaltenden Kopiermaterialbandlänge den der Indexprintstation näher liegenden Rand der Kopierbelichtungsöffnung durchlaufen hat.

2. Vorrichtung zur Herstellung von Kopien und Indexprints auf einem Kopiermaterialband, wobei in einem Rollenkopiergerät ein Farbscanner (3) zur bereichsweisen Messung der Kopiervorlagen (1), ein Belichtungsrechner (4) zur farboptimierten Einstellung der Kopierlichffarbe in einer Kopierstation (19), ein Bildsensor (13) zum Erfassen der farboptimierten Bildsignale in einem insbesondere mittels Strahlenteiler (11) aus dem Kopierstrahlengang abgezweigten Videostrahlengang mit Bildspeicher (16) und eine Indexprintstation angeordnet sind, dadurch gekennzeichnet, daß die Kopierstation (19) und die Indexprintstation in Kopiermateriallaufrichtung gegeneinander versetzt angeordnet sind, daß an dem Kopiermaterialbandweg (15) jeweils am Ende der beiden Stationen eine Papiertransporteinrichtung (21a, 21b) mit einer Transportlängenkontrolle angeordnet ist, daß eine Zähleinrichtung zum Feststellen der Kopiervorlagen des Satzes und eine Recheneinrichtung zur Bestimmung für die für die Indexprints dieses Satzes erforderliche Kopiermaterialbandlänge vorgesehen sind, daß zunächst die Transportvorrichtung (21a) in der Kopierstation (19) den für die Indexprints von Kopien freizuhaltenden Abschnitt des Kopiermaterialbandes durch die Kopieröffnung der Kopierstation (19) hindurchbewegt und die Transporteinrichung (21b) in der Indexprintstation (20) das Kopiermaterialband (15) fördert, bis die nachlaufende Kante der zuletzt aufbelichteten Kopie den von der Kopierstation weiter entfernten, senkrecht zur Bandlaufrichtung verlaufenden Rand des Belichtungsbereiches der Indexprintstation (20) erreicht hat.

3. Verfahren nach Anspruch 1, dadurch gekennzeichnet, daß die Kopiervorlagen in der Kopierstation (19) mit einem in seiner Farbe und/oder Menge entsprechend der bereichsweisen Messung der jeweiligen Kopiervorlage korrigierten Kopierlicht durchleuchtet werden, daß mittels eines in Richtung des Kopierlichtstrahlengangs hinter der Vorlage angeordneten Bildsensors (13) eine Bildsignalfolge erzeugt und in einem Bildspeicher (16) abgespeichert wird und daß in der gegenüber der Kopierstation (19) versetzten Indexprintstation (20) die eingespeicherten Bildsignale der vorangegangenen, zusammengehörigen Kopiervorlagen verkleinert auf das Kopiermaterialband aufbelichtet werden.

4. Vorrichtung nach Anspruch 2, dadurch gekennzeichnet, daß die Indexprintstation (20) von den in dem Bildspeicher (16) gespeicherten Bildsignalen so gesteuert ist, daß sie die als Bildsignale gespeicherten Kopiervorlagen in dem auf die Vorlagenkopien folgenden Abschnitt des Kopiermaterialbandes (15) in dem gewünschten Abbildungsmaßstab neben und in Laufrichtung hintereinander aufbelichtet.

5. Vorrichtung nach Anspruch 4, dadurch gekennzeichnet, daß die Indexprintstation (20) eine Kathodenstrahlröhre (17), insbesondere eine Farb-CRT enthält.

6. Vorrichtung nach Anspruch 4, dadurch gekennzeichnet, daß die Indexprintstation (20) ein Farblaserprinter ist.

7. Vorrichtung nach einem der Ansprüche 4 bis 6, dadurch gekennzeichnet, daß zwischen der Kopierstation (19) und der Indexprintstation (20) ein Kopiermaterialbandspeicher (15b) angeordnet ist, dessen Speicherkapazität ungefähr der in der Dauer der Indexprintbelichtung anfallenden Kopiermaterialbandlänge entspricht.

8. Verfahren nach Anspruch 1, dadurch gekennzeichnet, daß die Kopiervorlagen (1) vor der Kopierstation (19) hochauflösend gescannt werden, die Scanwerte einmal zur Kopierlichtmengenberechnung für den Kopiervorgang herangezogen, zum anderen diese Bildsignale entsprechend den errechneten Kopierlichtmengen korrigiert und in einen Bildspeicher (16') eingespeichert werden und nach dem Ende des Kopierens des jeweiligen Vorlagensatzes die als Bildsignale eingespeicherten Kopiervorlagen in dem gewünschten Abbildungsmaßstab nebeneinander und in Laufrichtung hintereinander in der Indexprintstation (20) auf das Kopiermaterialband (15) aufgezeichnet werden.

9. Vorrichtung nach Anspruch 2, dadurch gekennzeichnet, daß vor der Kopierstation (19) ein hochauflösender Farbscanner (3') angeordnet ist, der einerseits mit einem Belichtungsrechner(4'), andererseits mit einem Bildsignalspeicher(16') für die entsprechend den ermittelten Kopierlichtmengen für die Kopierstation 19 für das Aufbelichten mittels der Indexprintstation (20) korrigierten Scansignale verbunden ist.

10. Verfahren nach Anspruch 1, dadurch gekennzeichnet, daß die Kopierdaten der zusammengehörigen Kopiervorlagensätze über einen ersten Kopiervorgang hinaus in Zuordnung zu den Kopiervorlagen gespeichert werden, daß die Kopiervorlagen in einer in Transportrichtung neben der Kopierstation (19) angeordneten Mehrfachabbildungsvorrichtung (20) mittels einer in den Kopierlichtmengen steuerbaren Beleuchtungsanordnung (2, 3, 24, 25, 32) zeitlich nacheinander, einzeln nebeneinander und in Transportrichtung hintereinander auf das Kopiermaterialband aufbelichtet werden und daß die Kopiervorlagen (1) des nächstfolgenden Vorlagensatzes vor der Kopierstation zumindest bis zum Abschluß der Mehrfachbelichtung gespeichert werden.

11. Vorrichtung nach Anspruch 2, dadurch gekennzeichnet, daß die Vorrichtung zum Kopieren der Indexprints (20') als Mehrfachbelichtungseinrichtung (27) für jeweils eine Vorlage ausgebildet ist, daß über der Negativbühne der Indexprintstation (20) ein Lampenhaus (23) angeordnet ist, das über teilweise einschiebbare Farbfilter (25r, 25g, 25b) zur Intensitätssteuerung oder zeitlich gesteuert einsetzbare, subtraktive Filter maximaler Dichte die für die jeweilige Kopiervorlage errechneten Kopierlichtmengen auf die Vorlage aufbringt.

12. Vorrichtung nach Anspruch 11, dadurch gekennzeichnet, daß in der Indexprintstation (20') zumindest eine Zeile von Objektiven (27) mit einer Anzahl entsprechend der quer zur Papierlängsrichtung aufzubelichtenden, verkleinerten Abbildungen angeordnet ist und daß jedes dieser Objektive (27) mit einem Verschluß (34) zusammenwirkt, die einzeln und nacheinander zu öffnen sind.

13. Vorrichtung nach Anspruch 12, dadurch gekennzeichnet, daß bei Verwendung einer Objektivzeile (27) quer zur Vorlagentransportrichtung eine Verschiebeeinrichtung für die Zeile jeweils um eine der Länge der abgebildeten Indexprints entsprechende Länge vorgesehen ist oder eine Transporteinrichtung für das Papierband, die jeweils nach der Belichtung einer Zeile von Indexprints das Papierband um die Länge eines Indexprints transportiert.

14. Vorrichtung nach Anspruch 11, dadurch gekennzeichnet, daß in der Indexprintstation (20') ein einziges Objektiv (27) auf einer schrittmotorgesteuerten Verschiebeeinrichtung (29, 30) angeordnet ist, die das Objektiv (27) jeweils nach einem Kopiervorgang um einen der Bildbreite entsprechenden Weg verschiebt und bei Abschluß einer Bildzeile das Objektiv (27) in die Ausgangslage zurückstellt und/oder das Kopiermaterialband (15) um eine Indexbildlänge transportiert.

15. Vorrichtung nach Anspruch 14, dadurch gekennzeichnet, daß das Objektiv (27) in seiner Schnittweite variabel und/oder austauschbar ist und die Steuerung der Verschiebeeinrichtung (29, 30) und des Kopiermaterialtransportes entsprechend anpaßbar sind.

16. Vorrichtung nach einem der Ansprüche 11 bis 14, dadurch gekennzeichnet, daß oberhalb des Kopiermaterialbandes (15) eine verschiebbare Streulichtschutzabdeckung (28) mit einer der Bildgröße entsprechenden Belichtungsöffnung (28a) angeordnet ist, die jeweils mit der Lage des zu belichtenden Bereiches verfahren wird.

## Claims

1. Method for producing copies and so-called index prints - which are images reduced with respect to the copy - of sets of masters on a copying material strip, wherein the masters are assembled into a strip, and wherein the reduced images are successively exposed from the transverse dimension of the copying material strip onto the copying strip material side by side and in the running direction of the strip to produce an index print, characterised in that the copying exposure and the index print exposure take place at stations which are staggered in the running direction of the strip, that the results of a measurement by regions of the masters for the copying exposure are used to control the copying light quantities during the index print exposure, and that the copying material strip is conveyed with length control between the two stations such that, after the last master of a set has been copied, the copying material strip is conveyed into the index print station until the trailing edge of the last copy has reached the boundary of the exposure region of the index print station which is further away from the copying station and extends perpendicularly to the running direction of the strip, and further copying operations in the copying station are suspended until the trailing end of a copying material strip length which is required for the index prints of this master set and is to be kept clear of copying exposures has passed through the boundary of the copying exposure aperture lying nearer the index print station.

2. Apparatus for manufacturing copies and index prints on a copying material strip, wherein a colour scanner (3) for the measurement by regions of the masters (1), an exposure computer (4) for colour-optimised adjustment of the copying light colour in a copying station (19), an image sensor (13) with image memory (16) for detecting the colour-optimised image signals in a video beam path branched off the copying beam path, in particular by means of a beam splitter (11), and an index print station are arranged in a roller-type copier, characterised in that the copying station (19) and the index print station are staggered in the running direction of the copying material, that a respective paper conveyor device (21a, 21b) with control of the conveyed length is arranged at the end of the two stations along the copying material strip path (15), that a counting device for establishing the masters of the set and a computing device for determining the copying material strip length required for the index prints of this set are provided, that the conveyor device (21a) in the copying station (19) firstly moves the section of the copying material strip which is to be kept clear of copies for the index prints through the copying aperture of the copying station (19), and the conveyor device (21b) in the index print station (20) conveys the copying material strip (15) until the trailing edge of the copy exposed last has reached the boundary of the exposure region of the index print station (20) which is further away from the copying station and extends perpendicularly to the running direction of the strip.

3. Method according to claim 1, characterised in that the masters in the copying station (19) are transilluminated with copying light corrected in colour and/or quantity according to the measurement by regions of the respective master, that an image signal sequence is produced by means of an image sensor (13) arranged after the master in the direction of the copying light beam path and stored in an image memory (16), and that the stored image signals of the preceding, associated masters are exposed in reduced fashion onto the copying material strip in the index print station (20), which is staggered with respect to the copying station (19).

4. Apparatus according to claim 2, characterised in that the index print station (20) is controlled by the image signals stored in the image memory (16) such that it exposes the masters stored as image signals in the section of the copying material strip (15) following the master copies side by side and one after the other in the running direction of the strip to the desired image reproduction scale.

5. Apparatus according to claim 4, characterised in that the index print station (20) comprises a cathode-ray tube (17), in particular a colour CRT.

6. Apparatus according to claim 4, characterised in that the index print station (20) is a colour laser printer.

7. Apparatus according to one of claims 4 to 6, characterised in that a copying material strip store (15b) is arranged between the copying station (19) and the index print station (20), the storage capacity of which store corresponds approximately to the copying material strip length used in the duration of the index print exposure.

8. Apparatus according to claim 1, characterised in that the masters (1) undergo high-resolution scanning before the copying station (19), on the one hand the scanned values are used to calculate the copying light quantity for the copying operation and on the other these image signals are corrected according to the calculated copying light quantities and stored in an image memory (16') and, after the master set in question has been copied, the masters stored as image signals are recorded on the copying material strip (15) side by side and one after the other in the running direction in the index print station (20) to the desired image reproduction scale.

9. Apparatus according to claim 2, characterised in that a high-resolution colour scanner (3') is arranged before the copying station (19), which scanner is connected on one side to an exposure computer (4') and on the other to an image signal memory (16') for the scanned signals corrected according to the determined copying light quantities for the copying station (19) for exposure by means of the index print station (20).

10. Method according to claim 1, characterised in that the copying data of the associated master sets are stored beyond a first copying operation in association with the masters, that the masters are successively exposed onto the copying material strip individually side by side and one after the other in the conveying direction in a multiple imaging apparatus (20), which is arranged next to the copying station (19) in the conveying direction, by means of an illuminating arrangement (2, 3, 24, 25, 32), which can be controlled in terms of copying light quantities, and that the masters (1) of the next master set are stored before the copying station at least until the conclusion of the multiple exposure.

11. Apparatus according to claim 2, characterised in that the apparatus for copying the index prints (20') is formed as a multiple exposure device (27) for each master, that a lamp housing (23) is arranged above the negative support of the index print station (20), which housing applies the copying light quantities calculated for the master in question to the latter via partly insertable colour filters (25r, 25g, 25b) for intensity control or maximum-density subtractive filters, which can be inserted in a timed fashion.

12. Apparatus according to claim 11, characterised in that at least one row of lenses (27) of a number corresponding to the reduced images to be exposed transversely to the longitudinal direction of the paper is arranged in the index print station (20'), and that each of these lenses (27) co-operates with a shutter (34), which shutters can be opened individually and successively.

13. Apparatus according to claim 12, characterised in that, when using a row of lenses (27) transversely to the master conveying direction, a displacement device for displacing the row in each case by a length corresponding to the length of the imaged index print is provided, or a conveyor device is provided for the paper strip to convey the paper strip by the length of an index print following each exposure of a row of index prints.

14. Apparatus according to claim 11, characterised in that a single lens (27) is arranged in the index print station (20') on a displacement device (29, 30) which is controlled by a stepping motor, displaces the lens (27) by a distance corresponding to the image width following each copying operation and, at the end of an image row, returns the lens (27) to the original position and/or conveys the copying material strip (15) by the length of an index image.

15. Apparatus according to claim 14, characterised in that the lens (27) is variable in focal distance and/or interchangeable, and the control of the displacement device (29, 30) and of the copying material conveyance can be adapted accordingly.

16. Apparatus according to one of claims 11 to 14, characterised in that a displaceable stray light protection cover (28) with an exposure aperture (28a) corresponding to the image size is arranged above the copying material strip (15) and is always moved with the position of the region which is to be exposed.

## Revendications

1. Procédé d'élaboration de copies et d'impressions dites d'index - c'est-à-dire de représentations réduites par rapport à la copie - de séries d'originaux transparents sur une bande de matière de tirage, les originaux transparents étant réunis en une bande, et dans lequel les représentations réduites pour former une impression d'index sont côte à côte selon la dimension en largeur de la bande de matière de tirage et sont appliquées successivement par exposition sur la bande de matière de tirage, dans le sens d'avancement de la bande, caractérisé en ce que l'exposition des copies et l'exposition des impressions d'index s'effectuent au niveau de postes décalés l'un par rapport à l'autre dans le sens d'avancement de bande, en ce que l'on utilise, pour la commande des quantités de lumière de reproduction lors de l'exposition des impressions d'index les résultats d'une mesure par zones des originaux transparents pour l'exposition de reproduction et en ce que la bande de matière de tirage est acheminée entre les deux postes d'une manière contrôlée en longueur, de telle sorte que, après la reproduction du dernier original transparent d'une série, un transport de la bande de matière de tirage se produise vers le poste d'impression d'index, jusqu'à ce que le bord arrière de la dernière copie ait atteint le bord, s'étendant perpendiculairement au sens d'avancement de bande et plus éloigné du poste de reproduction, de la zone d'exposition du poste d'impression d'index, et que d'autres opérations de reproduction aient cessé dans le poste de reproduction, jusqu'à ce que l'extrémité arrière d'une longueur de bande de matière de tirage, requise pour l'impression d'index de cette série d'originaux et à maintenir exempte d'exposition de reproduction, ait traversé le bord, situé plus près du poste d'impression d'index, de l'ouverture d'exposition de reproduction.

2. Dispositif pour l'élaboration de copies et d'impressions d'index sur une bande de matière de tirage, dans lequel sont disposés, dans un appareil de reproduction à rouleaux, un dispositif à balayage couleur (3) pour la mesure par zones des originaux transparents (1), un processeur d'exposition (4) pour le réglage à optimisation de couleur de la couleur de la lumière de reproduction dans un poste de reproduction (19), un capteur d'images (13) pour détecter les signaux vidéo à optimisation de couleur dans un faisceau vidéo dérivé du faisceau de reproduction, notamment au moyen de diviseurs de faisceaux (11), avec mémoire d'images (16), et un poste d'impression d'index, caractérisé en ce que le poste de reproduction (19) et le poste d'impression d'index sont disposés avec un décalage mutuel dans le sens d'avancement de la matière de tirage, en ce qu'il est prévu, au niveau du chemin de bande de matière de tirage (15), chaque fois à l'extrémité des deux postes, un dispositif d'acheminement de papier (21a, 21b) avec un contrôle de longueur d'acheminement, en ce que sont prévus un dispositif de comptage pour la détermination des originaux transparents de la série et un dispositif de calcul pour la détermination de la longueur de bande de matière de tirage requise pour l'impression d'index de cette série, en ce que tout d'abord le dispositif d'acheminement (21a) dans le poste de reproduction (19) fait passer, dans l'ouverture de reproduction du poste de reproduction (19), le tronçon de la bande de matière de tirage à maintenir libre pour l'impression d'index de copies, et le dispositif d'acheminement (21b) dans le poste d'impression d'index (20) fait avancer la bande de matière de tirage (15) jusqu'à ce que le bord arrière de la copie exposée en dernier ait atteint le bord, s'étendant perpendiculairement au sens d'avancement de bande et plus éloigné du poste de reproduction, de la zone d'exposition du poste d'impression d'index (20).

3. Procédé selon la revendication 1, caractérisé en ce que les originaux transparents situés dans le poste de reproduction (19) sont traversés par une lumière de reproduction corrigée quant à sa couleur et/ou sa quantité en fonction de la mesure par zones de l'original transparent concerné, en ce qu'une suite de signaux vidéo est produite à l'aide d'un capteur d'images (13) disposé derrière l'original dans le sens du parcours du faisceau de lumière de reproduction, ces signaux vidéo étant conservés dans une mémoire d'images (16), et en ce que, dans le poste d'impression d'index (20) décalé par rapport au poste de reproduction (19), les signaux vidéo mémorisés des originaux transparents précédents et allant ensemble, sont appliqués, de manière réduite, par exposition sur la bande de matière de tirage.

4. Dispositif selon la revendication 2, caractérisé en ce que le poste d'impression d'index (20) est commandé par les signaux vidéo conservés dans la mémoire d'images (16) de telle manière qu'il applique par exposition les originaux transparents, mémorisés en tant que signaux vidéo, dans le tronçon, faisant suite aux reproductions d'originaux, de la bande de matière de tirage (15) à l'échelle de reproduction désirée, côte à côte et successivement dans le sens d'avancement.

5. Dispositif selon la revendication 4, caractérisé en ce que le poste d'impression d'index (20) contient un tube à rayons cathodiques (17), notamment un tube cathodique couleur.

6. Dispositif selon la revendication 4, caractérisé en ce que le poste d'impression d'index (20) est une imprimante laser couleur.

7. Dispositif selon l'une des revendications 4 à 6, caractérisé en ce qu'un tampon de bande de matière de tirage (15b) est disposé entre le poste de reproduction (19) et le poste d'impression d'index (20), sa capacité de stockage correspondant à peu près à la longueur de bande de matière de tirage produite pendant la durée de l'exposition d'impression d'index.

8. Procédé selon la revendication 1, caractérisé en ce que les originaux transparents (1) sont soumis à un balayage à haute définition avant le poste de reproduction (19), les valeurs de balayage étant utilisées une fois pour le calcul de la quantité de lumière de reproduction pour l'opération de reproduction, ces signaux vidéo étant d'autre part corrigés en fonction des quantités calculées de lumière de reproduction, et mémorisés dans une mémoire d'images (16'), tandis que, après la fin de la reproduction de chaque groupe d'originaux, les originaux transparents, mémorisés sous la forme de signaux vidéo, sont enregistrés à l'échelle de reproduction désirée, côte à côte et les uns derrière les autres dans le sens d'avancement sur la bande de matière de tirage (15), dans le poste d'impression d'index (20).

9. Dispositif selon la revendication 2, caractérisé en ce qu'un dispositif à balayage couleur (3') à haute définition est placé avant le poste de reproduction (19), et en ce qu'il est relié, d'une part à un processeur d'exposition (4') et d'autre part à une mémoire de signaux vidéo (16') pour les signaux de balayage, corrigés en fonction des quantités de lumière de reproduction déterminées pour le poste de reproduction (19) pour l'exposition, à l'aide du poste d'impression d'index (20).

10. Procédé selon la revendication 1, caractérisé en ce que les données de reproduction des groupes ou séries d'originaux transparents allant ensemble sont mémorisées au-delà d'une première opération de reproduction, de manière coordonnée aux originaux transparents, en ce que les originaux transparents sont appliqués par exposition sur la bande de matière de tirage, dans un dispositif de reproduction multiple (20) disposé à côté du poste de reproduction (19), à l'aide d'un agencement d'éclairage (2, 3, 24, 25, 32) pouvant être commandé quant aux quantités de lumière de reproduction et ce, l'un après l'autre dans le temps, côte à côte individuellement et l'un derrière l'autre dans le sens d'acheminement, et en ce que les originaux transparents (1) du groupe d'originaux suivants sont stockés avant le poste de reproduction, au moins jusqu'à la fin de l'exposition multiple.

11. Dispositif selon la revendication 2, caractérisé en ce que le dispositif pour la reproduction de l'impression d'index (20') est réalisé en tant que dispositif d'exposition multiple (27) pour chaque fois un original, en ce qu'un module d'éclairage (23) est disposé au-dessus de la tablette de négatif du poste d'impression d'index (20) et en ce qu'il applique, sur l'original, les quantités de lumière de reproduction calculées pour l'original transparent actuel, par l'intermédiaire de filtres colorés (25r, 25g, 25b) partiellement engageables, pour la commande de l'intensité, ou de filtres soustractifs de densité maximale, pouvant être insérés de manière commandée dans le temps.

12. Dispositif selon la revendication 11, caractérisé en ce que, dans le poste d'impression d'index (20'), est placée au moins une rangée d'objectifs (27) en un nombre correspondant aux représentations réduites à appliquer par exposition, transversalement au sens longitudinal du papier, et en ce que chacun de ces objectifs (27) coopère avec un obturateur (34), à ouvrir individuellement et successivement.

13. Dispositif selon la revendication 12, caractérisé en ce que, lors de l'utilisation d'une rangée d'objectifs (27), transversalement au sens d'acheminement d'original, il est prévu un dispositif de déplacement pour la rangée, chaque fois d'une longueur correspondant à la longueur de l'impression d'index reproduite, ou bien un dispositif d'acheminement pour la bande de papier, qui achemine chaque fois la bande de papier, après l'exposition d'une ligne de l'impression d'index, de la longueur d'une impression d'index.

14. Dispositif selon la revendication 11, caractérisé en ce que, dans le poste d'impression d'index (20'), est disposé un seul objectif (27) sur un dispositif de déplacement (29, 30) commandé par moteur pas-à-pas, et qui déplace l'objectif (27), chaque fois après une opération de reproduction, sur une distance correspondant à la largeur d'image et qui, à la fin d'une ligne d'image, ramène l'objectif (27) vers la position de départ et/ou achemine la bande de matière de tirage (15) d'une longueur d'impression d'index.

15. Dispositif selon la revendication 14, caractérisé en ce que l'objectif (27) est variable dans son étendue de montage et/ou échangeable, la commande du dispositif de déplacement (29, 30) et de l'acheminement de matière de tirage étant adaptable en conséquence.

16. Dispositif selon l'une des revendications 11 à 14, caractérisé en ce qu'il est prévu, au-dessus de la bande de matière de tirage (15), un écran mobile de protection contre la lumière diffusée (28) comportant une ouverture d'exposition (28a) correspondant à la taille d'image, avec chaque fois un déplacement selon la position de la zone à exposer.
